# EUROPEAN PATENT SPECIFICATION

(11) **EP 1 260 962 B1**
(45) Date of publication and mention of the grant of the patent: **14.08.2013**
(21) Application number: 02291083.0
(22) Date of filing: 30.04.2002
(51) Int. Cl.: G09G 3/36

(54) **Flicker reduction by display polarity interleaving**
Flimmerreduzierung durch Verschachtelung der Anzeigepolarität
Réduction du scintillement par entrelacement de la polarité d'image

(30) Priority: 14.05.2001 US 290880 P; 14.03.2002 US 99034
(43) Date of publication of application: 27.11.2002
(73) Proprietor: Thomson Licensing, 92130 Issy-les-Moulineaux (FR)
(72) Inventor: Willis, Donald Henry, Indianapolis, IN 46250 (US)
(74) Representative: Ruellan-Lemonnier, Brigitte

(56) References cited:
- JP-A- 6 004 045
- JP-A- 6 222 330
- US-A- 5 907 314
- US-B1- 6 229 515

## Description

### Background of the Invention

### Field of the Invention

The invention arrangements relate to the field of LCOS (liquid crystal on silicon) and/or LCD (liquid crystal display) video display systems, both reflective and transmissive and more particularly to a method and system of reducing flicker on such video display systems.

### Description of Related Art

Liquid crystal on silicon (LCOS) can be thought of as one large liquid crystal formed on a silicon wafer. The silicon wafer is divided into an incremental array of tiny plate electrodes. A tiny incremental region of the liquid crystal is influenced by the electric field generated by each tiny plate and the common plate. Each such tiny plate and corresponding liquid crystal region are together referred to as a cell of the imager. Each cell corresponds to an individually controllable pixel. A common plate electrode is disposed on the other side of the liquid crystal. Each cell, or pixel, remains lighted with the same intensity until the input signal is changed, thus acting as a sample and hold (so long as the voltage is maintained, the pixel brightness does not decay). The pixel does not decay, as is the case with the phosphors in a cathode ray tube. Each set of common and variable plate electrodes forms an imager. One imager is provided for each color, in this case, one imager each for red, green and blue.

It is typical to drive the imager of an LCOS display with a frame-doubled signal to avoid 30 Hz flicker, by sending first a normal frame in which the voltage at the common electrode is positive with respect to the voltage at the electrodes associated with each cell (positive picture) and then an inverted frame in which voltage at the common electrode is negative with respect to the voltage at the electrodes associated with each cell (negative picture) in response to a given input picture. The generation of positive and negative pictures ensures that each pixel will be written with a positive electric field followed by a negative electric field. The resulting drive field has a zero DC component, which is necessary to avoid the image sticking, and ultimately, permanent degradation of the imager. It has been determined that the human eye responds to the average value of the brightness of the pixels produced by these positive and negative pictures so long as the frame rate is at or above 120 Hertz.

The drive voltages are supplied to plate electrodes on each side of the LCOS array. In the presently preferred LCOS system to which the inventive arrangements pertain, the common plate is always at a potential of about 8 volts. This voltage can be adjustable. Each of the other plates in the array of tiny plates is operated in two voltage ranges. For positive pictures, the voltage varies between 0 volts and 8 volts. For negative pictures the voltage varies between 8 volts and 16 volts.

The light supplied to the imager, and therefore supplied to each cell of the imager, is field polarized. Each liquid crystal cell rotates the polarization of the input light responsive to the root mean square (RMS) value of the electric field applied to the cell by the plate electrodes. Generally speaking, the cells are not responsive to the polarity (positive or negative) of the applied electric field. Rather, the brightness of each pixel's cell is generally only a function of the rotation of the polarization of the light incident on the cell. As a practical matter, however, it has been found that the brightness can vary somewhat between the positive and negative field polarities for the same polarization rotation of the light. Such variation of the brightness can cause an undesirable flicker in the displayed picture.

In this embodiment, in the case of either positive or negative pictures, as the field driving the cells approaches a zero electric field strength, corresponding to 8 volts, the closer each cell comes to white, corresponding to a full on condition. Other systems are possible, for example where the common voltage is set to 0 volts. It will be appreciated that the inventive arrangements taught herein are applicable to all such positive and negative field LCOS imager driving systems.

Pictures are defined as positive pictures when the variable voltage applied to the tiny plate electrodes is less than the voltage applied to the pixels. The designations of pictures as positive or negative should not be confused with terms used to distinguish field types in interlaced video formats.

The present state of the art in LCOS requires the adjustment of the common mode electrode voltage, denoted VITO, to be precisely between the positive and negative field drive for the LCOS. The subscript ITO refers to the material indium tin oxide. The average balance is necessary in order to minimize flicker, as well as to prevent a phenomenon known as image sticking.

Japanese Publication JP6004045 discloses a driving method for a liquid crystal display to reduce flicker. In that driving method, the polarity of an image signal is inverted during time Tf for writing an image signal for one screen. Rows of the a liquid crystal display are divided by the number of times M is set to k, groups are formed by rows with common k (row group G (k)). An image signal is written to a group G(k1), and the polarity of the image signal is reversed after that.

US 6,229,515 B1 discloses a driving method for a liquid crystal display device. In this display area, the scanning line selection order is arbitrarily determined and the polarities are reversed on the basis of the determined result so as not to produce a bundle of scanning lines having the same polarity within one field.

Japanese publication JP6222330 discloses an active matrix type liquid crystal display device which has plural image signal lines, plural scanning signal lines, switching elements and pixel electrodes which are respectively arranged at the respective intersected points of the image signal lines and scanning signal lines and a counter electrode arranged to face the respective pixel electrodes via a liquid crystal layer. The display device executes AC, driving by subjecting the signal voltages supplied to the image signal lines to polarity inversion at every field. The one display field of the display device is constituted of the plural sub-fields 13 to 16 obtd. by executing interlaced scanning. The polarities of the image signal voltage are inverted every time the plural sub-fields 13 to 16 are sequentially displayed. In addition, the scanning is executed successively with the adjacent scanning lines.

US patent Number 5,907,314 discloses a liquid-crystal display apparatus wherein a matrix array is composed of scanning electrodes and signal electrodes. The scanning electrodes extend along a matrix row direction. The signal electrodes extend along a matrix column direction. Switching circuit elements are located at respective places where the scanning electrodes intersect with the signal electrodes. Pixel electrodes connected to the switching circuit elements are operative for controlling portions of the liquid-crystal layer respectively. A first device is operative for driving the scanning electrodes. A second device is operative for delaying a first video signal into a second video signal. A third device is operative for alternately selecting one out of the first video signal and the second video signal to generate a third video signal in response to the first video signal and the second video signal. A fourth device is operative for periodically inverting a polarity of the third video signal at a timing synchronous with alternately selecting by the third device to convert the third video signal into a fourth video signal. A fifth device is operative for feeding the fourth video signal to the signal electrodes.

In order to avoid visible flicker, it is common practice to use a higher vertical scanning frequency, or frame rate, to reduce the visibility of flicker. In an NTSC system, for example, a frame rate of 60 Hz can be doubled to a frame rate of 120 Hz to render the flicker less visible. In a PAL system, a field rate of 50 Hz can be doubled to a field rate of 100 Hz. However, the higher frame rate or field rate makes adjustment of the common mode electrode voltage more difficult because the flicker is not visible to the human eye. An operator cannot make the necessary adjustments without special instruments.

Fastner frame rates have required frame rate doublers, that is, a circuit that can cause each picture to be scanned twice within each frame period of the incoming video signal. A 60 Hz frame rate has a frame period of 1/60 second. Doubling a frame rate of 60 Hz requires scanning at 120 Hz. A 120 Hz frame rate has a frame period of 1/120 second. If an incoming video signal has a horizontal scanning frequency of 2f_{H}, where f_{H} is for example a standard NTSC horizontal scanning rate, and a standard frame rate of 60 Hz, the pictures must be displayed at 4 f_{H} and 120 Hz. In other words, each picture must be displayed twice during each 60 Hz frame period, that is, displayed twice in every 1/60 second. Each line must be written to the display at 4f. Although frame rate multipliers can solve flicker problems, such solution comes with many associated detriments. For example, a solution using frame rate doubling typically requires an additional frame of memory, additional pins in a device package that reads from the memory, additional real estate on a printed circuit board incorporating such circuitry, and additional compensation for handling any generated radiation associated with the frame rate doubling. All these associated detriments involve added expense in a consumer-oriented product sensitive to such additional cost factors.

There is a clear need to ameliorate the flicker problem without the expense and complexity of frame rate multipliers, such as frame rate doublers.

### Summary of the Invention

The present invention solves the prior art need to substantially reduce flicker without implementing frame rate multipliers.

Flicker visibility in an LCOS display can be reduced in accordance with the inventive arrangements by displaying positive and negative regions of pixels, for example horizontal stripes of rows in the LCOS imager, at the same time.

In one aspect of the invention, a method of flicker reduction in an imager having random row access comprises the steps of interleaving stripes of opposing polarity on the imager for a current frame, wherein each stripe has a plurality of horizontal lines and overwriting the plurality of horizontal lines in each stripe for a subsequent frame with another plurality of horizontal lines having an opposing polarity to the plurality of horizontal lines for the current frame, the current frame and the subsequent frame each having pictures that are one half positive polarity and one half negative polarity at a normal frame rate.

In another aspect of the invention, a flicker reduction system for an imager having random row access comprises a memory coupled to the imager and a controller coupled to the memory and the imager. Preferably, the controller is programmed to interleave stripes of opposing polarity on the imager for a current frame, wherein each stripe has a plurality of horizontal lines and programmed to overwrite the plurality of horizontal lines in each stripe for a subsequent frame with another plurality of horizontal lines having an opposing polarity to the plurality of horizontal lines for the current frame, the controller being programmed in the step of overwriting to overwrite a corresponding row for each stripe in a sequential scrolling manner.

### Brief Description of the Drawings

FIG. 1 is a diagram of a liquid crystal imager, for example an LCOS imager, divided into four stripes in accordance with the inventive arrangements.
FIG. 2 is a block diagram of a video processing system for implementing the inventive arrangements.
FIG. 3 is a flow chart illustrating a method of flicker reduction in accordance with the present invention.
FIG. 4 is a flow chart illustrating a method for reducing flicker in an imager in accordance with the present invention.

### Detailed Description of the Preferred Embodiments

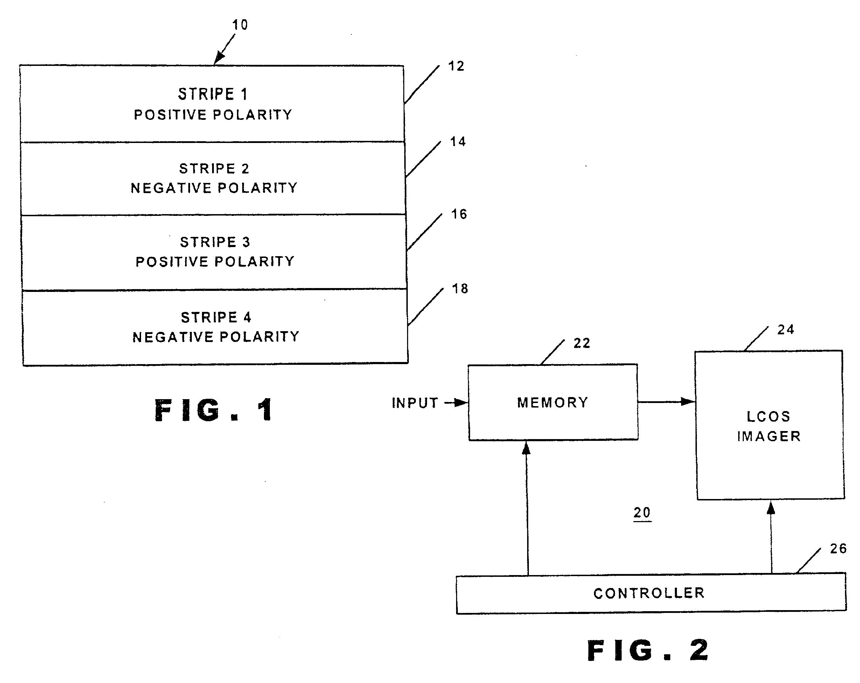

Figure 1 is a diagram illustrating how an LCOS imager 10 can be divided in a plurality of horizontal stripes, for example four stripes 12, 14, 16 and 18. If the imager is, for example, a 480 line (row) display, then each stripe contains 120 lines. The polarity of the stripes alternates, and as shown in Figure 1, stripe 1 (12) is positive, stripe 2 (14) is negative, stripe 3 (16) is positive and stripe 4 (18) is negative.

With further reference to Figure 2, as the input signal enters a video processing system 20, the signal is written into a memory 22, for example a frame memory. When the memory is full enough of a given picture, for example 80%, then the display of that picture can begin. Assuming the same 480 line display, line 361 in stripe 4 can be read out of the memory and written first as a positive row, overwriting the first row of stripe 4, which was negative. Next, line 241 can be read out of the memory and written to the display as a negative row, overwriting the first row of stripe 3, which was positive. Next, line 121 can be read out of the memory and written to the display as a positive row, overwriting the negative first row of stripe 2. Next, line 1 can be read out of the memory and written to the display as a negative row, overwriting the first positive row of stripe 1. Next, line 362 is read out of the memory and written to the display as a positive row, overwriting the second row of stripe 4. This process continues until all rows in all stripes are overwritten. At this point stripes 2 and 4 are positive pixels and stripes 1 and 3 are negative pixels. The memory is again 80% full of the next picture. Now the overwriting of the first picture can begin, but this time stripes 2 and 4 will be overwritten with negative pixels and stripes 1 and 3 will be overwritten with positive pixels.

The writing of the stripes can occur in any "4's" rotation, for example, 1 2 3 4, 4 3 2 1, etc. Different numbers of stripes can also be used, for example, 2, 6 and 8.

The stripes must have alternating polarities. Different numbers of stripes require different rotations.

The boundaries between lines of opposite polarity are subject to disclination errors due to large voltage differences, but since these voltage differences only exist for 2, 4, 6 or 8 line periods, for example, this does not present a practical problem due to the relatively slow response of the liquid crystals. In other words, although polarity differences (with large voltage differences) on adjacent rows could exist, the relatively short time that they exist avoids most or all visible disclination errors. It should be noted that the largest voltage differences would typically exist between lines already written and the adjacent lines to be written. For example, when line 121 is read out of the memory and written to the display as a positive row, overwriting the negative first row of stripe 2 as described above, line 121 will have a polarity different (and hence, a large voltage difference) with line 122 (currently, the negative second row of stripe 2) which has yet to be written to the display as a positive row. The memory can advantageously be read out more slowly than written to avoid having a long delay during the vertical blanking interval between each frame. The pixels of each progressive frame are advantageously written only once, but the alternating character of the display with respect to positive and negative pixels tends to substantially eliminate perceptible flicker without a frame rate multiplier.

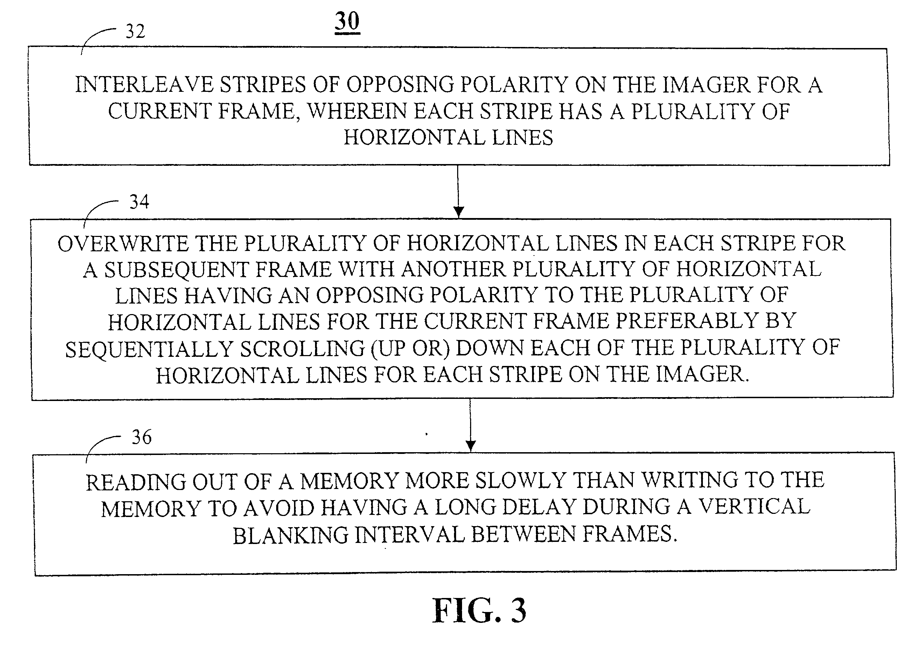

Referring to FIG. 3, a flow chart illustrating a method 30 for reducing flicker in an imager having random row access is shown. The method preferably comprises the steps of interleaving (32) stripes of opposing polarity on the imager for a current frame, wherein each stripe has a plurality of horizontal lines and overwriting (34) the plurality of horizontal lines in each stripe for a subsequent frame with another plurality of horizontal lines having an opposing polarity to the plurality of horizontal lines for the current frame.

Preferably, the step of overwriting comprises the step of sequentially scrolling down (or up) each of the plurality of horizontal lines for each stripe on the imager simultaneously. As described above, the current frame and the subsequent frames each have pictures that are preferably one half positive polarity and one-half negative polarity at a normal frame rate, although the present invention is not necessarily limited thereto. Also, as previously described, the current frame is preferably divided into four horizontal stripes having a first stripe of positive polarity, a second stripe of negative polarity, a third stripe of positive polarity, and a fourth stripe of negative polarity and a subsequent frame is divided into four horizontal stripes having a first stripe of negative polarity overwriting the first stripe of positive polarity, a second stripe of positive polarity overwriting the second stripe of negative polarity, a third stripe of negative polarity overwriting the third stripe of positive polarity, and a fourth stripe of positive polarity overwriting the fourth stripe of negative polarity. At step 36, the method can further comprise the step of reading out of a memory more slowly than writing to the memory to avoid having a long delay during a vertical blanking interval between frames.

Although the present invention has been described in conjunction with the embodiments disclosed herein, it should be understood that the foregoing description is intended to illustrate and not limit the scope of the invention as defined by the claims.

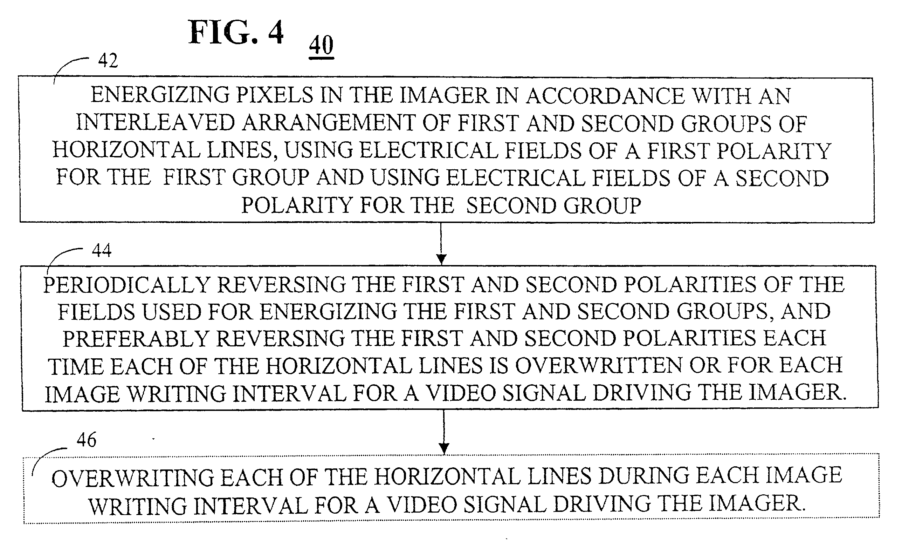

Referring to FIG. 4, a flow chart illustrating a method 40 for reducing flicker in an imager is shown. At step 42, pixels in the imager are energized in accordance with an interleaved arrangement of first and second groups of horizontal lines, using electrical fields of a first polarity for the first group and using electrical fields of a second polarity for the second group. The method continues at step 44 by periodically reversing the first and second polarities of the fields used for energizing the first and second groups, and preferably by reversing the first and second polarities each time each of the horizontal lines is overwritten or for each imager writing interval for a video signal driving the imager. Optionally, the method 40 may further comprise the step 46 of overwriting each of the horizontal lines during each image writing interval for a video signal driving the imager.

## Claims

1. A method of flicker reduction in an imager, comprising the steps of:
interleaving (32;42) stripes of opposing polarity on the imager for a current frame, wherein each stripe has a plurality of horizontal lines; and,
overwriting (34;44) the plurality of horizontal lines in each stripe for the subsequent frame with another plurality of horizontal lines having an opposing polarity to the plurality of horizontal lines for the current frame;
**characterized in that** the imager has random row access and the current frame and the subsequent frame each have pictures that are one half positive polarity and one-half negative polarity wherein each of the horizontal lines is written no more than one time per frame.

2. The method of claim 1, **characterized in that** the step of overwriting comprises the step of sequentially scrolling down each of the plurality of horizontal lines for each stripe on the imager.

3. The method of claim 1, **characterized in that** the step of overwriting comprises the step of sequentially scrolling up each of the plurality of horizontal lines for each stripe on the imager.

4. The method of claim 1, **characterized in that** the current frame is divided into four horizontal stripes having a first stripe (12) of positive polarity, a second stripe (14) of negative polarity, a third stripe (16) of positive polarity, and a fourth stripe (18) of negative polarity.

5. The method of claim 4, **characterized in that** the subsequent frame is divided into four horizontal stripes having a first stripe (12) of negative polarity overwriting the first stripe of positive polarity, a second stripe (14) of positive polarity overwriting the second stripe of negative polarity, a third stripe (16) of negative polarity overwriting the third stripe of positive polarity, and a fourth stripe (18) of positive polarity overwriting the fourth stripe of negative polarity.

6. The method of claim 1, **characterized in that** the method further comprises the step of reading out (36) of a memory more slowly than writing to the memory to avoid having a long delay during a vertical blanking interval between frames.

7. A method of flicker reduction in an imager, comprising the steps of:
interleaving (32;42) stripes of opposing polarity on the imager for a current frame, wherein each stripe has a plurality of horizontal lines; and,
overwriting (34;44) the plurality of horizontal lines in each stripe for the subsequent frame with another plurality of horizontal lines having an opposing polarity to the plurality of horizontal lines for the current frame;
**characterized in that** the imager has random row access and the step of overwriting comprises overwriting one horizontal line of each of the different stripes located in the same relative position in a sequential scrolling manner, wherein each of the horizontal lines is written no more than one time per frame.

8. A flicker reduction system for an imager, comprising:
a memory (22); and,
an imager (24); wherein:
the memory is coupled to the imager;
a controller is coupled to the memory and the imager, wherein the controller is programmed to;
interleave stripes of opposing polarity on the imager for a current frame, wherein each stripe has a plurality of horizontal lines; and
overwrite the plurality of horizontal lines in each stripe for the subsequent frame with another plurality of horizontal lines having an opposing polarity to the plurality of horizontal lines for the current frame;
the system being **characterized in that** the imager has random row access and the current frame and the subsequent frames each have pictures that are one half positive polarity and one-half negative polarity wherein each of the horizontal lines is written no more than one time per frame.

9. The system of claim 8, **characterized in that** the controller is programmed in the step of overwriting to sequentially scroll down each of the plurality of horizontal lines for each stripe on the imager.

10. The system of claim 8, **characterized in that** the controller is programmed in the step of overwriting to sequentially scroll up each of the plurality of horizontal lines for each stripe on the imager.

11. The system of claim 8, **characterized in that** the current frame is divided into four horizontal stripes having a first stripe of positive polarity, a second stripe of negative polarity, a third stripe of positive polarity, and a fourth stripe of negative polarity.

12. The system of claim 11, **characterized in that** the subsequent frame is divided into four horizontal stripes having a first stripe of negative polarity overwriting the first stripe of positive polarity, a second stripe of positive polarity overwriting the second stripe of negative polarity, a third stripe of negative polarity overwriting the third stripe of positive polarity, and a fourth stripe of positive polarity overwriting the fourth stripe of negative polarity.

13. The system of claim 8, **characterized in that** the imager is a liquid crystal on silicon (LCOS) imager.

14. A flicker reduction system for an imager, comprising:
a memory (22); and,
an imager (24); wherein:
the memory is coupled to the imager;
a controller is coupled to the memory and the imager, wherein the controller is programmed to:
interleave stripes of opposing polarity on the imager for a current frame, wherein each stripe has a plurality of horizontal lines; and
overwrite the plurality of horizontal lines in each stripe for the subsequent frame with another plurality of horizontal lines having an opposing polarity to the plurality of horizontal lines for the current frame;
the system being **characterized in that** the imager has random row access and the controller is further programmed in the step of overwriting to overwrite one horizontal line of each of the different stripes located in the same relative position in a sequential scrolling manner.

## Patentansprüche

1. Verfahren zur Flimmerreduzierung in einem Bildwandler, wobei das Verfahren die folgenden Schritte umfasst:
Verschachteln (32; 42) von Streifen mit entgegengesetzter Polarität in dem Bildwandler für ein gegenwärtiges Einzelbild, wobei jeder Streifen eine Mehrzahl horizontaler Zeilen aufweist; und
Überschreiben (34; 44) der Mehrzahl horizontaler Zeilen in jedem Streifen für das nachfolgende Einzelbild mit einer anderen Mehrzahl horizontaler Zeilen, die eine entgegengesetzte Polarität zu der Mehrzahl horizontaler Zeilen für das gegenwärtige Einzelbild aufweisen;
**dadurch gekennzeichnet, dass** der Bildwandler einen wahlfreien Zeilenzugriff aufweist und dass das gegenwärtige Einzelbild und das nachfolgende Einzelbild jeweils Bilder aufweisen, die zu einer Hälfte positive Polarität aufweisen und zu einer Hälfte negative Polarität aufweisen, wobei jede der horizontalen Zeilen nicht mehr als einmal pro Einzelbild geschrieben wird.

2. Verfahren nach Anspruch 1, **dadurch gekennzeichnet, dass** der Schritt des Überschreibens den Schritt des aufeinanderfolgenden Herunterscrollens jeder der Mehrzahl horizontaler Zeilen für jeden Streifen in dem Bildwandler umfasst.

3. Verfahren nach Anspruch 1, **dadurch gekennzeichnet, dass** der Schritt des Überschreibens den Schritt des aufeinanderfolgenden Heraufscrollens jeder der Mehrzahl horizontaler Zeilen für jeden Streifen in dem Bildwandler umfasst.

4. Verfahren nach Anspruch 1, **dadurch gekennzeichnet, dass** das gegenwärtige Einzelbild in vier horizontale Streifen geteilt ist, die einen ersten Streifen (12) mit positiver Polarität, einen zweiten Streifen (14) mit negativer Polarität, einen dritten Streifen (16) mit positiver Polarität und einen vierten Streifen (18) mit negativer Polarität aufweisen.

5. Verfahren nach Anspruch 4, **dadurch gekennzeichnet, dass** das nachfolgende Einzelbild in vier horizontale Streifen geteilt ist, die einen ersten Streifen (12) mit negativer Polarität, der den ersten Streifen mit positiver Polarität überschreibt, einen zweiten Streifen (14) mit positiver Polarität, der den zweiten Streifen mit negativer Polarität überschreibt, einen dritten Streifen (16) mit negativer Polarität, der den dritten Streifen mit positiver Polarität überschreibt, und einen vierten Streifen (18) mit positiver Polarität, der den vierten Streifen mit negativer Polarität überschreibt, aufweisen.

6. Verfahren nach Anspruch 1, **dadurch gekennzeichnet, dass** das Verfahren ferner den Schritt des langsameren Auslesens (36) eines Speichers als das Schreiben in den Speicher, um eine lange Verzögerung während eines vertikalen Austastintervalls zwischen den Einzelbildern zu vermeiden, umfasst.

7. Verfahren zur Flimmerreduzierung in einem Bildwandler, wobei das Verfahren die folgenden Schritte umfasst:
Verschachteln (32; 42) von Streifen mit entgegengesetzter Polarität in dem Bildwandler für ein gegenwärtiges Einzelbild, wobei jeder Streifen eine Mehrzahl horizontaler Zeilen aufweist; und
Überschreiben (34; 44) der Mehrzahl horizontaler Zeilen in jedem Streifen für das nachfolgende Einzelbild mit einer anderen Mehrzahl horizontaler Zeilen, die eine entgegengesetzte Polarität zu der Mehrzahl horizontaler Zeilen für das gegenwärtige Einzelbild aufweisen;
**dadurch gekennzeichnet, dass** der Bildwandler einen wahlfreien Zeilenzugriff aufweist und dass der Schritt des Überschreibens das Überschreiben einer horizontalen Zeile jedes der unterschiedlichen Streifen, die sich an derselben relativen Stelle befindet, in aufeinanderfolgend scrollender Weise umfasst, wobei jede der horizontalen Zeilen nicht mehr als einmal pro Einzelbild geschrieben wird.

8. Flimmerreduzierungssystem für einen Bildwandler, wobei das Flimmerreduzierungssystem umfasst:
einen Speicher (22); und
einen Bildwandler (24); wobei:
der Speicher mit dem Bildwandler gekoppelt ist;
ein Controller mit dem Speicher und mit dem Bildwandler gekoppelt ist, wobei der Controller programmiert ist zum: Verschachteln von Streifen mit entgegengesetzter Polarität in dem Bildwandler für ein gegenwärtiges Einzelbild, wobei jeder Streifen eine Mehrzahl horizontaler Zeilen aufweist; und
Überschreiben der Mehrzahl horizontaler Zeilen in jedem Streifen für das nachfolgende Einzelbild mit einer anderen Mehrzahl horizontaler Zeilen, die eine entgegengesetzte Polarität zu der Mehrzahl horizontaler Zeilen für das gegenwärtige Einzelbild aufweisen;
wobei das System **dadurch gekennzeichnet ist, dass** der Bildwandler einen wahlfreien Zeilenzugriff aufweist und dass das gegenwärtige Einzelbild und die nachfolgenden Einzelbilder jeweils Bilder aufweisen, die zu einer Hälfte positive Polarität aufweisen und zu einer Hälfte negative Polarität aufweisen, wobei jede der horizontalen Zeilen nicht mehr als einmal pro Einzelbild geschrieben wird.

9. System nach Anspruch 8, **dadurch gekennzeichnet, dass** der Controller dafür programmiert ist, in dem Schritt des Überschreibens jede der Mehrzahl horizontaler Zeilen für jeden Streifen in dem Bildwandler aufeinanderfolgend herunterzuscrollen.

10. System nach Anspruch 8, **dadurch gekennzeichnet, dass** der Controller dafür programmiert ist, in dem Schritt des Überschreibens jede der Mehrzahl horizontaler Zeilen für jeden Streifen in dem Bildwandler aufeinanderfolgend heraufzuscrollen.

11. System nach Anspruch 8, **dadurch gekennzeichnet, dass** das gegenwärtige Einzelbild in vier horizontale Streifen geteilt ist, die einen ersten Streifen mit positiver Polarität, einen zweiten Streifen mit negativer Polarität, einen dritten Streifen mit positiver Polarität und einen vierten Streifen mit negativer Polarität aufweisen.

12. System nach Anspruch 11, **dadurch gekennzeichnet, dass** das nachfolgende Einzelbild in vier horizontale Streifen geteilt ist, die einen ersten Streifen mit negativer Polarität, der den ersten Streifen mit positiver Polarität überschreibt, einen zweiten Streifen mit positiver Polarität, der den zweiten Streifen mit negativer Polarität überschreibt, einen dritten Streifen mit negativer Polarität, der den dritten Streifen mit positiver Polarität überschreibt, und einen vierten Streifen mit positiver Polarität, der den vierten Streifen mit negativer Polarität überschreibt, aufweisen.

13. System nach Anspruch 8, **dadurch gekennzeichnet, dass** der Bildwandler ein Flüssigkristall-auf-Silicium-Bildwandler (LCOS-Bildwandler) ist.

14. Flimmerreduzierungssystem für einen Bildwandler, wobei das Flimmerreduzierungssystem umfasst:
einen Speicher (22); und
einen Bildwandler (24); wobei:
der Speicher mit dem Bildwandler gekoppelt ist;
ein Controller mit dem Speicher und mit dem Bildwandler gekoppelt ist, wobei der Controller programmiert ist zum: Verschachteln von Streifen mit entgegengesetzter Polarität in dem Bildwandler für ein gegenwärtiges Einzelbild, wobei jeder Streifen eine Mehrzahl horizontaler Zeilen aufweist; und
Überschreiben der Mehrzahl horizontaler Zeilen in jedem Streifen für das nachfolgende Einzelbild mit einer anderen Mehrzahl horizontaler Zeilen, die eine entgegengesetzte Polarität zu der Mehrzahl horizontaler Zeilen für das gegenwärtige Einzelbild aufweisen;
wobei das System **dadurch gekennzeichnet ist, dass** der Bildwandler einen wahlfreien Zeilenzugriff aufweist und wobei der Controller ferner dazu programmiert ist, in dem Schritt des Überschreibens eine horizontale Zeile jedes der unterschiedlichen Streifen, die sich an derselben relativen Stelle befindet, in aufeinanderfolgend scrollender Weise zu überschreiben.

## Revendications

1. Un procédé de réduction de scintillement dans un imageur, comprenant les étapes suivantes :
entrelacement (32, 42) de bandes de polarité opposée sur l'imageur pour une trame en cours, où chaque bande présente une pluralité de lignes horizontales ; et ,
écrasement en écriture (34 44) de la pluralité de lignes horizontales dans chaque bande pour la trame suivante par une autre pluralité de lignes horizontales présentant une polarité opposée à la pluralité de lignes horizontales pour la trame en cours
**caractérisé en ce que** l'imageur dispose d'un accès aléatoire aux rangées et la trame en cours ainsi que la trame suivante, chacune disposant d'images qui pour une moitié ont une polarité positive et pour l'autre moitié une polarité négative, dans lequel chaque ligne horizontale est écrite au maximum une fois par trame.

2. Le procédé de la revendication 1, **caractérisé en ce que** l'étape d'écrasement comprend l'étape de défilement séquentiel vers le bas de chaque pluralité de lignes horizontales pour chaque bande sur l'imageur.

3. Le procédé de la revendication 1, **caractérisé en ce que** l'étape d'écrasement comprend l'étape de défilement séquentiel vers le haut de chaque pluralité de lignes horizontales pour chaque bande sur l'imageur.

4. Le procédé de la revendication 1, **caractérisé en ce que** la trame en cours est divisée en quatre bandes horizontales constituées d'une première bande (12) de polarité positive, d'une deuxième bande (14) de polarité négative, d'une troisième bande (16) de polarité positive, et d'une quatrième bande (18) de polarité négative.

5. Le procédé de la revendication 4, **caractérisé en ce que** la trame suivante est divisée en quatre bandes horizontales consituées d'une première bande (12) de polarité négative écrasant la première bande de polarité positive, d'une deuxième bande (14) de polarité positive écrasant la deuxième bande de polarité négative, d'une troisième bande (16) de polarité négative écrasant la troisième bande de polarité positive, et d'une quatrième bande (18) de polarité positive écrasant la quatrième bande de polarité négative.

6. Le procédé de la revendication 1, **caractérisé en ce que** le procédé comprend en outre l'étape de lecture (36) d'une mémoire plus lente que l'écriture dans la mémoire afin d'éviter un retard important lors d'un intervalle de suppression verticale entre les trames.

7. Un procédé de réduction de scintillement dans un imageur, comprenant les étapes suivantes :
entrelacement (32, 42) de bandes de polarité opposées sur l'imageur pour une trame en cours, où chaque bande présente une pluralité de lignes horizontales ; et
écrasement en écriture (34 44) de la pluralité de lignes horizontales dans chaque bande pour la trame suivante avec une autre pluralité de lignes horizontales présentant une polarité opposée à la pluralité de lignes horizontales de la trame en cours
**caractérisé en ce que** l'imageur dispose d'un accès aléatoire aux rangées et l'étape d'écrasement comprend l'écrasement en écriture d'une ligne horizontale de chacune des différentes bandes situées dans la même position relative par défilement séquentiel, où chaque ligne horizontale est écrite au maximum une fois par trame.

8. Un système de réduction du scintillement pour un imageur, comprenant :
une mémoire (22) ; et,
un imageur (24) ; dans lequel :
la mémoire est couplée à l'imageur ;
un contrôleur est couplé à la mémoire et à l'imageur, dans lequel le contrôleur est programmé pour :
entrelacer (32, 42) des bandes de polarité opposée sur l'imageur pour une trame en cours, où chaque bande présente une pluralité de lignes horizontales ; et
écraser en écriture la pluralité de lignes horizontales dans chaque bande pour la trame suivante avec une autre pluralité de lignes horizontales présentant une polarité opposée à la pluralité de lignes horizontales pour la trame en cours :
le système étant **caractérisé en ce que** l'imageur dispose d'un accès aléatoire aux rangées et la trame en cours et les trames suivantes disposent chacune d'images qui pour une moitié ont une polarité positive et pour l'autre moitié une polarité négative, où chaque ligne horizontale est écrite au maximum une fois par trame.

9. Le système de la revendication 8, **caractérisé en ce que** le contrôleur est programmé dans l'étape d'écrasement pour faire défiler séquentiellement vers le bas chaque pluralité de lignes horizontales pour chaque bande sur l'imageur.

10. Le système de la revendication 8, **caractérisé en ce que** le contrôleur est programmé dans l'étape d'écrasement pour faire défiler séquentiellement vers le haut chaque pluralité de lignes horizontales pour chaque bande sur l'imageur.

11. Le système de la revendication 8, **caractérisé en ce que** la trame en cours est divisée en quatre bandes horizontales constituées d'une première bande (12) de polarité positive, d'une deuxième bande (14) de polarité négative, d'une troisième bande (16) de polarité positive, et d'une quatrième bande (18) de polarité négative.

12. Le procédé de la revendication 11, **caractérisé en ce que** la trame suivante est divisée en quatre bandes horizontales constituées d'une première bande de polarité négative écrasant la première bande de polarité positive, d'une deuxième bande de polarité positive écrasant la deuxième bande polarité négative, d'une troisième bande de polarité négative écrasant la troisième bande de polarité positive et d'une quatrième bande de polarité positive écrasant la quatrième bande de polarité négative.

13. Le système de la revendication 8 **caractérisé en ce que** l'imageur est un imageur à cristaux liquides sur silicone (LCOS).

14. Un système de réduction du scintillement pour un imageur, comprenant :
une mémoire (22) ; et,
un imageur (24) ; dans lequel :
la mémoire est couplée à l'imageur ;
un contrôleur est couplé à la mémoire et à l'imageur, dans lequel le contrôleur est programmé pour ;
entrelacer des bandes de polarité opposée sur l'imageur pour une trame en cours, où chaque bande présente une pluralité de lignes horizontales ; et
écraser en écriture la pluralité de lignes horizontales dans chaque bande pour la trame suivante avec une autre pluralité de lignes horizontales présentant une polarité opposée à la pluralité de lignes horizontales pour la trame en cours ;
le système étant **caractérisé en ce que** l'imageur dispose d'un accès aléatoire aux rangées et le contrôleur est programmé en outre dans l'étape d'écrasement pour écraser une ligne horizontale de chaque bande différente située dans la même position relative par défilement séquentiel.
